Europäisches Patentamt

European Patent Office

Office européen des brevets

(11) Publication number: **0 117 930**
**B1**

(12) **EUROPEAN PATENT SPECIFICATION**

(45) Date of publication of patent specification: **23.09.87**

(21) Application number: **83300932.7**

(22) Date of filing: **23.02.83**

(51) Int. Cl.⁴: **G 06 F 12/14,** G 06 F 9/46

(54) Interactive work station with auxiliary microprocessor for storage protection.

(43) Date of publication of application:
**12.09.84 Bulletin 84/37**

(45) Publication of the grant of the patent:
**23.09.87 Bulletin 87/39**

(84) Designated Contracting States:
**DE FR GB**

(56) References cited:
**EP-A-0 009 593**
**EP-A-0 009 594**
**US-A-3 931 504**
**US-A-4 104 718**
**US-A-4 184 201**

**IBM TECHNICAL DISCLOSURE BULLETIN, vol.**
**20, no. 12, May 1978, pages 5434-5436, New**
**York, USA, D.F. BANTZ et al.: "Subsystem for**
**managing locks"**

**IBM TECHNICAL DISCLOSURE BULLETIN, vol.**
**24, no. 2, July 1981, pages 1066-1067, New**
**York, USA, D.C. SOLLY et al.: "Software**
**storage protect"**

(73) Proprietor: **International Business Machines**
**Corporation**
**Old Orchard Road**
**Armonk, N.Y. 10504 (US)**

(72) Inventor: **Walker, Lionel Robert**
**30 Lakewood Road**
**Chandlers Ford Eastleigh Hampshire (GB)**
Inventor: **Vines, Terence Alfred**
**67 Southampton Road Park Gate**
**Southampton Hampshire (GB)**
Inventor: **Solly, David Charles**
**15 Pevrells Wood Avenue**
**Chandlers Ford Eastleigh Hampshire (GB)**

(74) Representative: **Blake, John et al**
**IBM United Kingdom Limited Intellectual**
**Property Department Hursley Park**
**Winchester Hampshire SO21 2JN (GB)**

Courier Press, Leamington Spa, England.

**Description**

This invention relates to an interactive work station in which a microprocessor is used to control various input/output devices. More particularly the invention relates to such an interactive work station in which, in accordance with the present invention, an auxiliary microprocessor is used to provide a storage protection function.

Typical of microprocessor-controlled interactive work stations are the IBM 8775 Display Station, the IBM Displaywriter word processor, and the IBM Personal Computer. Generally, these have a microprocessor which controls the various input/output devices, for example, display, printer, keyboard, light pen, communications, etc. Although some control code for the microprocessor will be held in a read only store, control code and data for various tasks will be stored in a read/write or random access memory as shown in Patent Specifications EP—A—009593 and 009594. For a proper functioning of the work station, it is essential that the various storage locations are not corrupted.

In conventional main frame computing, the computer is commonly provided with a storage protection mechanism which prevents unauthorised writing by the computer into the random access memory. However most microprocessor do not have a hardware protection mechanism and serious problems can arise due to corruption of storage. Apart from incorrect operation of the work station, serious problems can occur during normal operations where user data can be corrupted.

IBM Technical Disclosure Bulletin, Volume 24, No 2 at pages 1066 and 1067 describes a technique in which software is used to provide storage protection for a microprocessor which does not have storage protection. However this degrades the performance of the microprocessor by adding to the various tasks which it has to perform.

An object of the present invention is to provide a storage protection facility for a microprocessor-controlled work station in which the microprocessor's performance is not degraded.

According to the invention as claimed, an interactive work station includes a main microprocessor not having a storage protection mechanism and used to perform different tasks, a read/write memory containing data and/or code accessible by the main microprocessor in performing said tasks, a plurality of input/output devices connected to and controlled by the main microprocessor and an auxiliary circuit operable to monitor accesses by the main microprocessor of the memory for validating these accesses and when a protect violation is detected to cause the main microprocessor to be interrupted to terminate execution of the task, characterised in that said auxiliary circuit is a microprocessor not able to write to the memory and is arranged so that each write access by the main microprocessor to the memory causes an interrupt to be generated at the auxiliary microprocessor which is thereafter caused to capture the target write address in an input stack, and in that the main microprocessor is permitted to continue to perform said tasks until it is interrupted by the auxiliary microprocessor if the auxiliary microprocessor detects a protect violation.

There have been many previous-known data processing systems which employ more than one processor and, as stated above, main frame computers have traditionally been provided with inherent (inbuilt) storage protection facilities.

A multiprocessing system is one in which two or more main frame processors dynamically share the application load with the ability to transfer all work to one processor if the other fails. In a variation, duplicate processors execute the same application in parallel, comparing the results from each processor for high reliability. Alternatively it has been proposed to use two processors, a back-up or alternative processor which is normally idle taking over an application from the main processor in the event of the latter failing.

In other known main frame computer configurations, a sub-processor is used for performing a specific function delegated by the main processor but without which that function will not be performed. Debug processors have also been used in which the debug processor has equal or higher performance than that of the main processor and which monitors operations of the main processor for program debug purposes.

US—A—4,184,201 describes a processor arrangement in which a data processor has access to an instruction memory and a data memory. In addition, the data processor is provided with a storage protection mechanism in which reading from and writing to an area of the data memory where the security levels do not agree is inhibited, i.e. access is permitted after determining that there is no protection violation. This security level check is performed "on line" and requires time for the check to be carried out. Another checking is also performed during reading of the instruction memory and if a security violation is detected the processor is interrupted. This last checking does not aid in retaining software control of the processor but only protects data from compromise.

Such an arrangement is unsuitable for a microprocessor controlling many tasks in an interactive workstation. Not only would it introduce a performance overhead (degradation) which would be difficult to justify, it would also be inordinately expensive.

It should be noted that some microprocessors are offered with or without a hardware storage protection mechanism. Thus the Motorola M68000 microprocessor is available with or without storage protection: however storage protection supplied by the manufacturer triples its cost. This is a serious cost disadvantage compounded by the fact that the M68000 microprocessor is more powerful (and hence more expensive) than is actually required to control many interactive work stations.

The invention will now be described, by way of example, with reference to the accompanying drawings, in which:—

Figure 1 is a block diagram showing a known interactive work station arrangement;

Figure 2 illustrates a preferred embodiment of the invention; and

Figure 3 is a flow chart illustrating operation of the embodiment of Figure 2.

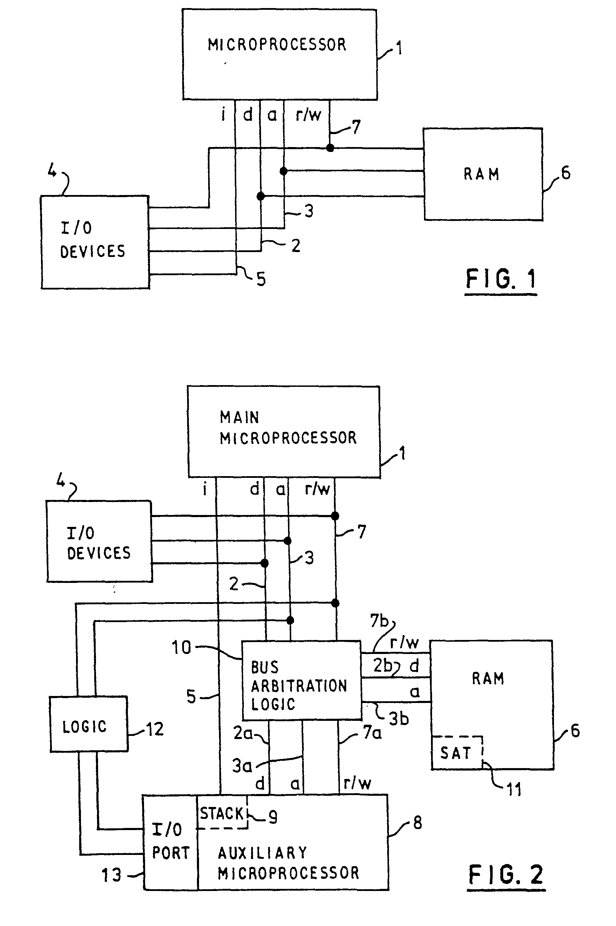

Figure 1 is a simplified block diagram of an interactive work station comprising a microprocessor 1 having data (d) and address (a) busses 2 and 3 respectively. Various input/output devices, represented symbolically at 4, are connected to the data and address busses 2 and 3 and also to an interrupt (i) line 5. Typically the input/output devices include a keyboard, data display, light pen, printer, tablet, communicating receiver/transmitter and are connected by appropriate adapters to the data and address busses 2 and 3 as is described in the aforementioned specifications EP—A—009593 and 009594. A read/write or random access memory 6 is attached to the data and address busses 2 and 3 and to a read/write (r/w) line 7 by means of which the microprocessor 1 can indicate whether or not it is reading from RAM 6 or writing into RAM 6.

Not shown in Figure 1 is the read only store which would normally be used to store some of the control code for the microprocessor. Other control code, which may be downstream loaded via a communications link from a host computer, not shown, or loaded into the work station on a magnetic diskette or other local storage medium (not shown) is stored in RAM 6 together with any data requiring processing by the microprocessor. As is well known, the various input/output devices indicate their need for service by the microprocessor by raising an interrupt signal on interrupt line 5.

As is also well known, the microprocessor 1 performs a number of different tasks. These tasks may be independent of one another or may be interdependent in that one task requires the result of an earlier task. Some independent tasks might need to access the same storage location. Each task requires several accesses by the microprocessor 1 of RAM 6 either to read or write control code or data from or into RAM 6. For a correct operation of the work station, it is essential that code and/or data are not written into storage locations which are not allocated for use by the task currently being executed.

Traditional main frame computers have had such a storage protection feature but, as is explained above, the vast majority of microprocessors do not have a storage protection mechanism. Essentially this is because many control applications of microprocessors do not require storage protection and it is financially unattractive to provide storage protection on a microprocessor when it is not required. Some of

the newer, more powerful microprocessors such as the Motorola 68000 microprocessor are provided with an optional storage protection mechanism but this triples the cost of the microprocessor compared with the same microprocessor without the storage protection.

Figure 2 shows how this problem can be solved without substantially degrading the performance of the microprocessor 1. In Figure 2, similar parts are given the same reference numerals as in Figure 1. However, in addition to the main microprocessor 1, an auxiliary microprocessor 8 is also provided having data and address busses 2a and 3a and read/write line 7a in a similar manner to the arrangement of Figure 1. Bus arbitration logic 10 connected to busses 2, 2a, 3, 3a and lines 7, 7a allows either microprocessor 1 or 8 to access RAM 6 by means of data and address busses 2b and 3b and read/write line 7b.

The bus arbitration logic 10 will not be described since such logic allowing multiple master microprocessors to share control of the busses is well known. Both Motorola Inc and Intel Inc have arbitration logic schemes for their own particular bus architectures. The purpose of the bus arbitration logic is to allow each microprocessor to control independent access to the same area of RAM 6. Thus data and/or code can be accessed by either of microprocessors 1 and 8.

Preferably the auxiliary microprocessor 8 has a built-in read only store, not shown, to contain its control code but alternatively this control code could reside in a separate read only store (not shown), a separate random access memory (not shown), or share the RAM 6.

The main microprocessor 1 uses a control program which governs the operation of multiple application tasks. The control program manages the allocation of real storage between the application tasks using a storage allocation table (S.A.T.) 11 within RAM 6. The storage allocation table 11 is a record of the storage resource made available to the tasks. It may indicate that the storage is private, that is for use by one task, or shared by a number of tasks. Typically the table entries could have a single address field associated with multiple task ID fields. In an extension, it could also indicate special cases, for example those locations to which nothing can be written. It is arranged that all STORE instructions executed by the application tasks cause an interrupt to be generated at the auxiliary microprocessor 8. At this time the auxiliary microprocessor 8 captures the target address of the STORE instruction. This information is accepted by a high-priority interrupt routine in the auxiliary microprocessor 8 and placed in an internal input stack 9. The main microprocessor 1 executes the STORE instruction and continues the application task with minimum delay.

The auxiliary microprocessor 8 analyses the data in the input stack 9 (at a lower priority) and checks the validity of the target address of each STORE instruction therein using the storage allocation table 11 maintained by the main microprocessor 1. Clearly the storage allocation table must be accessible by both microprocessors for reading although it is not writable by the auxiliary microprocessor 8. If the auxiliary microprocessor 8 detects a storage protection violation, it interrupts the main microprocessor 1 using interrupt line 5 to indicate an error condition.

The delay between execution by the main microprocessor 1 of the STORE instruction and its subsequent rejection by the auxiliary microprocessor 8 is unlikely to be large and is unimportant since the input stack 9 within the microprocessor 8 contains all the necessary identifying information.

To ensure that the storage allocation table 11 is not changed whilst STORE instructions are awaiting validation in the auxiliary microprocessor's input stack 9, a software interlock is used between the main microprocessor's control program and the stack processing code in the auxiliary microprocessor 8. This ensures that before any change is made to the storage allocation table 11, the control program waits until the input stack is empty.

Interruption of the auxiliary microprocessor 8 upon execution of every STORE instruction by the main microprocessor 1 may be achieved by simple logic 12 connected to the I/O port 13 and monitoring the address bus 3 and read/write line 7 to detect execution of STORE instructions by the main microprocessor 1.

Since the only task of the auxiliary microprocessor 8 is to monitor and check write (or store) access of the RAM 6.by the microprocessor 1, the microprocessor 8 can be much slower and cheaper than the main microprocessor.

As an example, the main microprocessor 1 could be constituted by Motorola M6800 (without software protection), M68000 or M6809 microprocessors in which case the auxiliary microprocessor 8 could be constituted by Motorola M6800 or M6809 microprocessors. Alternatively the main microprocessor 1 could be constituted by an Intel 8086 or 8088 microprocessor with the auxiliary microprocessor 8 being constituted by the Intel 8088 or 8051 microprocessor respectively.

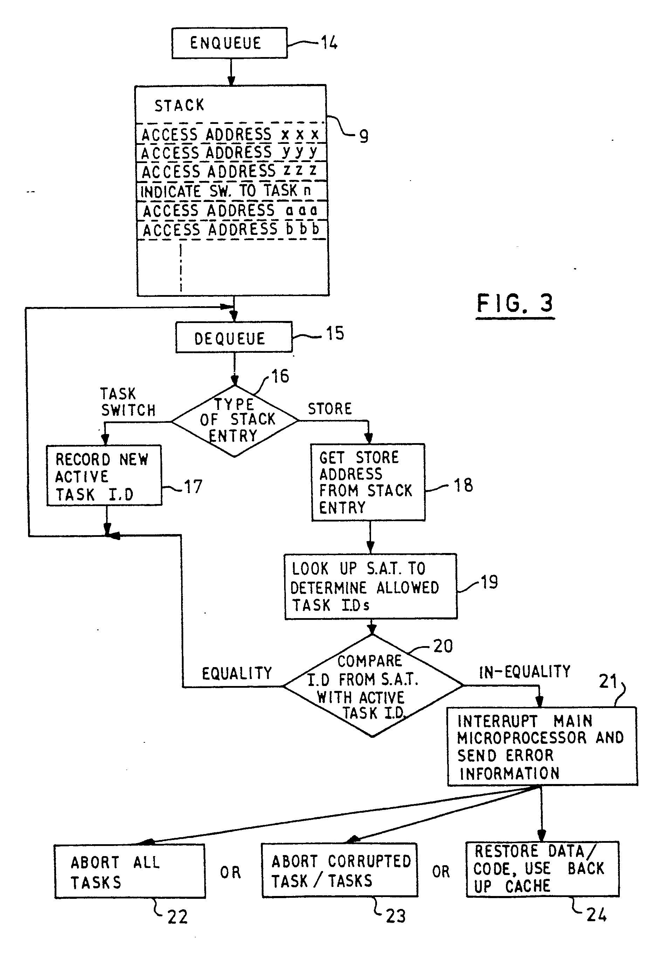

Figure 3 is a flow chart of the validation process by the auxiliary processor 8. As indicated above, information relating to the two types of event (STORE and TASK SWITCH) are enqueued, as at 14, in an input stack 9 within the auxiliary microprocessor. Within the stack 9 will be a series of target addresses to RAM 6 for each STORE instruction. Task switches will be notified by the main microprocessor 1 to the auxiliary microprocessor 8 by the following technique. For each task a unique byte is reserved in RAM 6 associated with the SAT 11. Upon a task switch, the main microprocessor 1 will be stored into that byte appropriate to the new task. Thus each change of task is indicated into the stack 9 by a STORE Instruction to a specific address. The auxiliary microprocessor 8 can then deduce the active task identifier by interpreting these indicators. It will be appreciated that alternative techniques could be provided to enable the microprocessor 8 to identify the current task ID whilst it is validating STORE addresses.

The auxiliary microprocessor 8 dequeues elements from the stack 9, while elements remain as at 15, and first determines the type of stack entry as at 16. If the entry indicates a task switch, the auxiliary microprocessor records the ID as at 17. If the stack entry indicates that a write to storage access has been made, the target address is obtained from the stack entry, as at 18, and in addition, as at 19, the auxiliary microprocessor 8 will access the RAM 6 to look up in the storage allocation table 11 the ID or IDs of the task or tasks which are allowed to write information into that address. In step 20, the auxiliary microprocessor compares the ID or IDs received from the storage allocation table 11 with the active task ID (see step 17). If there is equality, meaning that the STORE instruction to the main microprocessor 1 is being executed to an allowed storage location, the next entry in the stack is dequeued as at 15.

If, on the other hand, there is inequality at step 20, this means that a STORE instruction has been performed to a disallowed location and that that location has had its contents corrupted. In this event the auxiliary microprocessor interrupts the main microprocessor, as at 21, and sends error information thereto. A number of implementation options are then available.

In a first option, all tasks on the main microprocessor 1 can be aborted, as at 22: this option is useful for debugging control code for the work station as it is being developed. In a second option, it can be arranged to abort the corrupted task (and any dependent tasks), as at 23, but to allow the main microprocessor 1 to perform independent tasks not requiring access to the corrupted location: this option would allow gradual, non-catastrophic, shut down of the work station. Clearly with the second option, the auxiliary microprocessor 8 would need to continue dequeuing its input stack 9.

In a third option, a small cache memory, not shown, could be used to keep a copy of data and/ or code stored in storage addresses currently being accessed by the main microprocessor 1 and listed in the storage allocation table 11. Then, as at 24, when an error is detected the microprocessor can restore the correct data and/or code within the corrupted storage location. This would allow a re-try of the task or continuation of other tasks dependent upon that storage location.

The use of the second or third options is quite significant where the work station is connected to a resource shared by other work stations. Also in a process control application in which the main microprocessor monitors a parameter, for example temperature, and in addition analyses those parameters over a period of time, it is very beneficial if the microprocessor can still control emergency actions, caused for example by a high temperature, even if there is an error in the analysis function. Typical independent tasks in a word processor are spelling checks, diskette to diskette transfers and printing: it is clearly useful if an error in one of these independent functions does not prevent operation of the other functions.

What has been described is an interactive work station in which an auxiliary microprocessor 8 is used to monitor write or store accesses of memory by the main, controlling microprocessor 1. Since the auxiliary microprocessor 8 need not be as powerful as the main microprocessor 1, this gives a cheap storage protection mechanism to a system in which there would not normally be storage protection. Since the auxiliary microprocessor 8 itself need only read from the read/write memory 6, it does not give any problems itself because of its own lack of a storage protection facility.

**Claims**

1. An interactive work station including a main microprocessor (1) not having a storage protection mechanism and used to perform different tasks, a read/write memory (6) containing data and/or code accessible by the main microprocessor (1) in performing said tasks, a plurality of input/output devices (4) connected to and controlled by the main microprocessor (1) and an auxiliary circuit (8) operable to monitor accesses by the main microprocessor (1) of the memory (6) for validating these accesses and when a protect violation is detected to cause the main microprocessor (1) to be interrupted to terminate execution of the task, characterised in that said auxiliary circuit is a microprocessor (8) not able to write to the memory (6) and is arranged so that each write access by the main microprocessor (1) to the memory (6) causes an interrupt to be generated at the auxiliary microprocessor which is thereafter caused to capture the target write address in an input stack (9), and in that the main microprocessor (1) is permitted to continue to perform said tasks until it is interrupted by the auxiliary microprocessor (8) if the auxiliary microprocessor (8) detects a protect violation.

2. An interactive work station as claimed in claim 1, in which the auxiliary microprocessor (8) is arranged to maintain active task identification information and target memory addresses within the input stack (9) for each write instruction executed by said main microprocessor (1), in which the main microprocessor (1) is arranged to maintain a storage allocation table (11) relating allowable write addresses to each task, and in which the auxiliary microprocessor (8) is arranged to compare for each target address in the input stack (9) the active task identification with the task identification contained in the storage address table (11).

3. An interactive work station as claimed in claim 2, comprising interlock means for preventing said main microprocessor (1) from changing said storage allocation table (11) until after the auxiliary microprocessor (8) has processed each target address entry in the stack (9).

4. An interactive work station as claimed in claim 2 or claim 3, in which each time said main microprocessor (1) executes a write (store) instruction it is adapted to raise a high level interrupt to said auxiliary microprocessor (8) to enable the target address to be stored therein, processing of the stack (9) by the auxiliary microprocessor (8) being at a lower priority level.

5. An interactive work station as claimed in claim 2, 3 or 4, including a cache memory for keeping a copy of the contents of storage addresses listed in the storage allocation table (11), said main microprocessor (1) being arranged to restore the contents of a corrupted storage location from said cache memory.

6. An interactive work station as claimed in any preceding claim, in which only those tasks requiring access to the storage address giving rise to the error are inhibited, the main microprocessor (1) being arranged to continue performance of other tasks not dependent on access to the corrupted storage location.

**Patentansprüche**

1. Dialogfähiger Arbeitsplatz mit einem Haupt-Mikroprozessor (1), welcher keinen Speicherschutzmechanismus hat und zur Durchführung verschiedener Aufgaben (tasks) verwendet wird, einem Lese/Schreib-Speicher (6), welcher Daten und/oder Code enthält, auf welche der Haupt-Mikroprozessor (1) bei der Durchführung der Aufgaben zugreifen kann, einer Anzahl von Eingabe/Ausgabe-Vorrichtungen (4), welche mit dem Haupt-Mikroprozessor (1) verbunden sind und durch diesen gesteuert werden, und einer Hilfsschaltung (8), welche so betreibbar ist, daß sie Zugriffe des Haupt-Mikroprozessors (1) auf den Speicher (6) zur Validierung dieser Zugriffe überwacht und, wenn ein Schutzverstoß festgestellt wird, eine Unterbrechung des Haupt-Mikroprozessors (1) zur Beendigung der Ausführung der Aufgabe bewirkt, dadurch gekennzeichnet, daß die Hilfsschaltung ein Mikroprozessor (8) ist, welcher nicht fähig ist, den Speicher (6) zu beschreiben, und so eingerichtet ist, daß jeder Schreibzugriff des Haupt-Mikroprozessors (1) auf den Speicher (6) eine am Hilfs-Mikroprozessor zu erzeugende Unterbrechung bewirkt, welcher danach veranlaßt wird, die Ziel-Schreibadresse in einem Eingangs-Stack (9) zu erfassen, und daß dem Haupt-Mikroprozessor (1) gestattet ist, die Ausführung der Aufgaben fortzusetzen, bis er durch den Hilfs-Mikroprozessor (8) unterbrochen wird, wenn der Hilfs-Mikroprozessor (8) einen Schutzverstoß feststellt.

2. Dialogfähiger Arbeitsplatz nach Anspruch 1, bei welchem der Hilfs-Mikroprozessor (8) so eingerichtet ist, daß er Identifikationsinformation für die aktive Aufgabe und Ziel-Speicheradressen im Eingangs-Stack (9) für jeden durch den Haupt-Mikroprozessor (1) ausgeführten Schreibbefehl hält, bei welchem der Haupt-Mikroprozessor (1) so eingerichtet ist, daß er eine Speicherzuordnungstabelle (11) hält, welche zulässige Schreibadressen zu jeder Aufgabe in Beziehung setzt, und bei welchem der Hilfs-Mikroprozessor (8) so eingerichtet ist, daß er für jede Zieladresse im Eingangs-Stack (9) die Aktivaufgabenidentifikation mit der in der Speicherzuordnungstabelle (11) enthaltenen Aufgabenidentifikation vergleicht.

3. Dialogfähiger Arbeitsplatz nach Anspruch 2, welcher Verriegelungsmittel umfaßt, die eine Veränderung der Speicherzuordnungstabelle (11) durch den Haupt-Mikroprozessor (1) verhindern, bis der Hilfs-Mikroprozessor (8) jede Zieladresseneingabe in den Stack (9) verarbeitet hat.

4. Dialogfähiger Arbeitsplatz nach Anspruch 2 oder 3, bei welchem der Haupt-Mikroprozessor (1), jedesmal wenn er einen Schreib-(Speicher-)Befehlausführt, eingerichtete ist, eine Unterbrechung hoher Ebene am Hilfs-Mikroprozessor (8) eintreten zu lassen, um eine Speicherung der Zieladresse in diesem zu ermöglichen, wobei die Verarbeitung des Stack (9) durch den Hilfs-Mikroprozessor (8) auf einer niedrigeren Prioritätsebene ist.

5. Dialogfähiger Arbeitsplatz nach Anspruch 2, 3 oder 4, welcher ein Cache-Speicher zum Aufbewahren einer Kopie des Inhalts von in der Speicherzuordnungstabelle (11) aufgelisteten Speicheradressen enthält, wobei der Haupt-Mikroprozessor (1) so eingerichtet ist, daß er den Inhalt eines korrumpierten Speicherplatzes aus dem Cache-Speicher wiederherstellt.

6. Dialogfähiger Arbeitsplatz nach irgendeinem vorstehenden Anspruch, bei welchem nur diegenigen Aufgaben gesperrt werden, welche Zugriff auf die zu dem Fehler Anlaß gebenden Speicheradressen erfordern, wobei der Haupt-Mikroprozessor (1) so eingerichtet ist, daß er die Durchführung von anderen Aufgaben, die nicht von einem Zugriff auf den korrumpierten Speicherplatz abhängen, fortsetzt.

**Revendications**

1. Un poste de travail interactif comprenant un microprocesseur principal (1) dépourvu de mécanisme de protection de mémoire et utilisé pour accomplir différentes tâches, une mémoire vive (6) contenant des données et/ou des programmes auxquels le microprocesseur principal (1) peut accéder dans l'accomplissement des tâches, un ensemble de dispositifs d'entrée/sortie (4) connectés au microprocesseur principal (1) et commandés par ce dernier, et un circuit auxiliaire (8) capable de contrôler des accès en mémoire (6) effectués par le microprocesseur principal (1) pour valider ces accès, et capable d'interrompre le microprocesseur principal (1) pour mettre fin à l'exécution de la tâche, en cas de détection d'un viol de protection, caractérisé en ce que le circuit auxiliaire est un microprocesseur (8) incapable d'écrire dans la mémoire (6) et est conçu de façon que chaque accès d'écriture en mémoire (6) effectué par le microprocesseur principal (1) provoque la génération d'une interruption pour le microprocesseur auxiliaire, ce dernier mémorisant ensuite l'adresse d'écriture de destination dans une pile d'entrée (9), et en ce que le microprocesseur principal (1) est autorisé à continuer l'accomplissement des tâches jusqu'à ce qu'il soit interrompu par le microprocesseur auxiliaire (8), si ce dernier détecte un viol de protection.

2. Un poste de travail interactif selon la revendication 1, dans lequel le microprocesseur auxiliaire (8) est conçu de façon à entretenir dans la pile d'entrée (9) une information d'identification de tâche active et des adresses de mémoire de destination, pour chaque instruction d'écriture exécutée par le microprocesseur principal (1), dans lequel le microprocesseur principal (1) est conçu de façon à entretenir une table d'affectation de mémoire (11) indiquant des adresses d'écriture autorisées pour chaque tâche, et dans lequel le microprocesseur auxiliaire (8) est conçu de façon à comparer, pour chaque adresse de destination dans la pile d'entrée (9), l'identification de tâche active avec l'identification de tâche qui est contenue dans la table d'affectation de mémoire (11).

3. Un poste de travail interactif selon la revendication 2, comprenant des moyens de verrouillage destinés à empêcher le microprocessur principal (1) de changer la table d'affectation de mémoire (11) avant que le microprocesseur auxiliaire (8) ait traité chaque rubrique d'adresse de destination dans la pile (9).

4. Un poste de travail interactif selon la revendication 2 ou la revendication 3, dans lequel chaque fois que le processeur principal (1) exécute une instruction d'écriture (enregistrement), il déclenche une interruption de haut niveau pour le microprocesseur auxiliaire (8), pour permettre l'enregistrement de l'adresse de destination dans le microprocesseur auxiliaire, le traitement de la pile (9) par le microprocesseur auxiliaire (8) ayant un niveau de priorité inférieur.

5. Un poste de travail interactif selon la revendication 2, 3 ou 4, comprenant une antémémoire destinée à conserver une copie du contenu d'adresses de mémoire qui figurent dans la table d'affectation de mémoire (11), le microprocesseur principal (1) étant conçu de façon à rétablir le contenu d'une positione de mémoire altérée, à partir de l'antémémoire.

6. Un poste de travail interactif selon n'importe quelle revendication précédente, dans lequel seules les tâches nécessitant l'accès à l'adresse de mémoire qui donne lieu à l'erreur sont mises hors fonction, le microprocesseur principal (1) étant conçu de façon à poursuivre l'accomplissement d'autres tâches qui ne dépendent pas de l'accès à la position de mémoire altérée.

FIG. 1

FIG. 2

FIG. 3